# EUROPEAN PATENT APPLICATION

(11) **EP 1 559 489 A2**
(43) Date of publication of application: **03.08.2005**
(21) Application number: 04030091.5
(22) Date of filing: 18.12.2004
(51) Int. Cl.: B22C 9/00

(54) **Gas-permeable molds for composite material fabrication and molding method**

(30) Priority: 29.01.2004 US 767620
(71) Applicant: Akebono Corporation, Farmington Hills, Michigan 48331 (US)
(72) Inventor: Kesavan, Sunil, Farmington Hills, Michigan 48335 (US); Shao, Xinming, Rochester Hills, Michigan 48309 (US)
(74) Representative: Müller, Thomas Michael, Dipl.-Ing.

(57) **Abstract**

A method and apparatus for the production of composite molded materials in which a portion of the mold tooling is a porous, gas-permeable material that enables the venting of entrapped air, moisture, and reactant or by-product gases without the necessity for a physical disruption of the mold components to accomplish the venting. This enables a reduction in cycle time to produce the molding product which reduces manufacturing costs. Applications in which the use of such mold and molding method are advantageous include, among others, the molding of friction materials, composite parts made with various synthetic thermosetting resins, such as phenolic resins, and structural components which may contain reinforcements, such as solid moldings, pre-fabricated composite structures, and shaped articles such as refractory bricks.

## Description

The present invention relates to a gas-permeable mold for molding composite materials which release gaseous reactants and/or by-products, and a molding method using the same.

### BACKGROUND OF THE INVENTION

In typical molding operations, heat and pressure are applied to transform or mold a material, such as a thermoplastic or thermosetting polymer, a metal or a composite, into a desired formation. Some common thermosetting resins used in compression molding include phenolic, urea, and melamine resins. The presence of internal voids in a molded composite can adversely affect the structural and mechanical properties of the molded product. A common cause for void formation is the inability to displace entrapped air, moisture, and/or gaseous reactants from the mold cavity. As used herein, the term gaseous reactants refers to both reactant gases used in and with the molding ingredients and their by-products. Consequently, a need to incorporate a venting step during the molding process exists in order to drive off entrapped air, moisture, and/or gaseous reactants.

A typical molding process, therefore, requires one or more venting steps during the molding process. In a common venting step, a portion of a compression mold is disturbed by periodically moving or temporarily removing the portion to enable the entrapped air, moisture, and/or gaseous reactants to be vented from the mold. This venting step slows the molding process. Additionally, the disturbing of the mold components in the venting step may cause undesirable temperature and pressure fluctuations which affect the consistency of the final molded product, possibly leading to flaws and/or non-conforming surface features. Thus, it would be advantageous to allow venting of entrapped air, moisture, and/or gaseous reactants without disturbing the mold components.

Prior art attempts to address the venting step without disturbing mold components have included the molding of composite materials with air-permeable molds which vent or purge entrapped moisture and/or air during the molding process without disturbing the mold components. These composite materials, however, are simply transformed via phase changes and only have entrapped air and/or moisture that needs to be vented. A much more complicated situation arises when the molding process includes chemical reactions taking place in the mold during the molding process which produce gaseous reactants that need to be vented. For example, while molding certain composite friction materials, reactant gases are released which, if not properly vented, can react or recombine to clog the pores of the mold. When a phenolic novolac resin with hexamethylenetetramine (hereinafter "hexa") is used and heated during the molding process, hexa initially decomposes into ammonia and formaldehyde. If excess ammonia and formaldehyde remain in the mold cavity, it may lead to flaws and/or nonconforming product. Fugitive and unconverted ammonia and formaldehyde will attempt to escape from the mold. If the temperature is too low in any part of the porous mold walls, the fugitive and unconverted ammonia and formaldehyde may condense and/or recombine into hexa and plug the pores of the mold material upon cooling.

Thus, there remains a need for an apparatus and a method for molding of composite materials wherein a reaction takes place within the mold cavity during the molding process. Also, the apparatus and method enable a non-clogging, non-condensing outflow of gaseous reactants from the mold without disturbing the mold components in a separate venting step.

### SUMMARY OF THE INVENTION

The present invention discloses a method and apparatus for the production of composite molded materials. A portion of the mold tooling is a porous, gas-permeable material that enables venting of entrapped air, moisture, and/or gaseous reactants without the necessity for a physical disruption of the mold components. This enables a reduction in cycle time to produce the molded product which, in turn, reduces the manufacturing costs. Applications in which the use of such mold and molding method are advantageous include, among others, the molding of friction materials, composite parts made with various synthetic thermosetting resins, such as phenolic resins, and structural components which may contain reinforcements, such as solid moldings, pre-fabricated composite structures, and shaped articles such as refractory bricks.

In one aspect of the present invention, a mold assembly is operable to form a composite material when a chemical reaction occurs in the mold cavity. The mold assembly includes a first and second mold member joined together to form a mold cavity. At least a portion of one of the mold members is made of a porous, gas-permeable material. The material enables venting therethrough of gaseous reactants that result from chemical reactions occurring in the mold cavity during the molding operation. This venting does not physically disturb the mold and prevents recombination and condensation of gaseous reactants within the porous gas-permeable material.

In another aspect of the present invention, a method of molding a composite material is disclosed. The method includes: (1) introducing ingredients of the composite material into a mold cavity of a mold body; (2) closing the mold cavity; (3) reacting at least a portion of the ingredients in the mold cavity; and (4) venting gaseous reactants resulting from the reaction through a porous gas-permeable portion of the mold body.

In still another aspect of the present invention, a method of molding a friction material product is disclosed wherein chemical reactions take place within a mold cavity releasing gaseous reactants. The method includes: (1) placing ingredients of the friction material into a mold cavity of a mold assembly; (2) closing the mold cavity; (3) pressurizing the mold cavity; (4) heating the ingredients in the mold cavity; (5) reacting the ingredients in the mold cavity; (6) venting gaseous reactants resulting from the reaction through a porous gas-permeable portion of the mold assembly while maintaining the mold cavity in a closed state; and (7) removing a molded friction material product from the mold cavity.

Further areas of applicability of the present invention will become apparent from the detailed description. It should be understood that the detailed description and specific examples, while indicating the preferred embodiment of the invention, are intended for purposes of illustration only, and are not intended to limit the scope of the invention.

### BRIEF DESCRIPTION OF THE DRAWINGS

The present invention will become more fully understood from the detailed description and the accompanying drawings, wherein:
- Figure 1: is a schematic cross-sectional view of a mold assembly according to the principles of the present invention in an open state;
- Figure 2: is a schematic cross-sectional view of the mold assembly of Figure 1 in a closed state;
- Figure 3: is a schematic cross-sectional view of the mold assembly of Figure 2 illustrating the venting of gaseous reactants; and
- Figure 4: is a flow diagram of a method of molding a composite material according to the principles of the present invention.

### DETAILED DESCRIPTION OF THE PREFERRED EMBODIMENT

The following description of the preferred embodiment is merely exemplary in nature and is in no way intended to limit the invention, its application, or uses.

A mold assembly according to the principles of the present invention allows not only entrapped air and/or moisture in the mold cavity to be vented without disturbing the mold cavity, but also vents gaseous reactants produced in the mold cavity. The term gaseous reactants, as used herein, refers to both reactant gases used in and with the molding ingredients and their by-products. These gaseous reactants are produced when molding a composite material that undergoes a chemical reaction in the mold cavity. The mold assembly, as described in more detail below, has a porous, gas-permeable portion that enables the gaseous reactants along with entrapped air and moisture to be vented therethrough without disturbing the mold cavity. This maintains a desired pressure and temperature range in the mold cavity at all times during the molding process and decreases cycle time. The venting process is controlled in order to prevent the gaseous reactants from condensing and/or recombining in the pores. This avoids plugging or clogging of the pores. The molding process also helps to control and prevent decomposition of the molding ingredients.

For example, it may be desirable to use a phenolic resin with hexa when molding a composite material. When hexa is heated, it may decompose into ammonia and formaldehyde. A portion of the ammonia and formaldehyde react with other mold ingredients in the mold cavity to form a portion of the final molded product. Some fugitive and unconverted ammonia and/or formaldehyde (gaseous reactants), however, remain and need to be vented from the mold cavity along with entrapped air and moisture. Depending on the temperature, the fugitive or unconverted ammonia and formaldehyde may combine back into hexa while traveling through the porous gas-permeable material. This may clog the pores and preclude proper venting of the mold cavity. As such, the operating temperature is controlled to avoid the recombining and/or condensing.

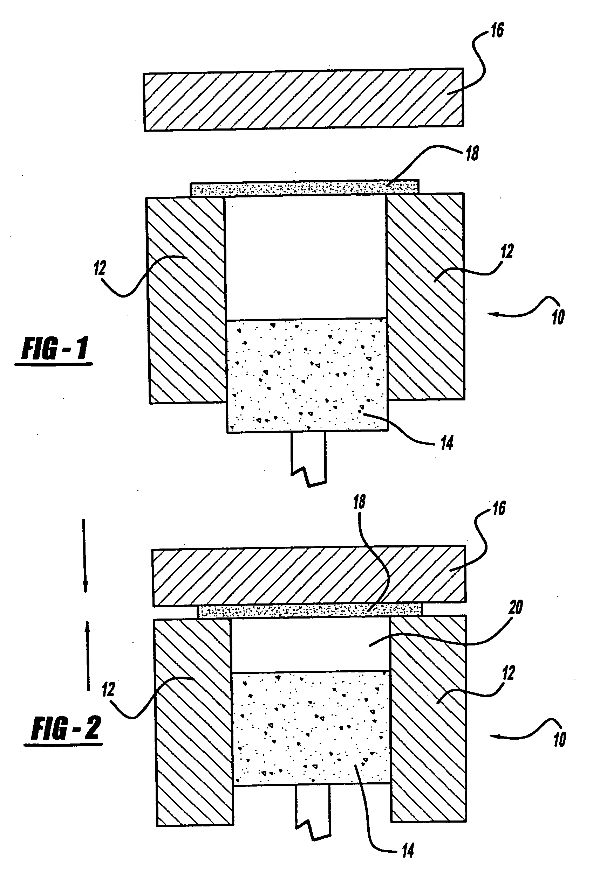

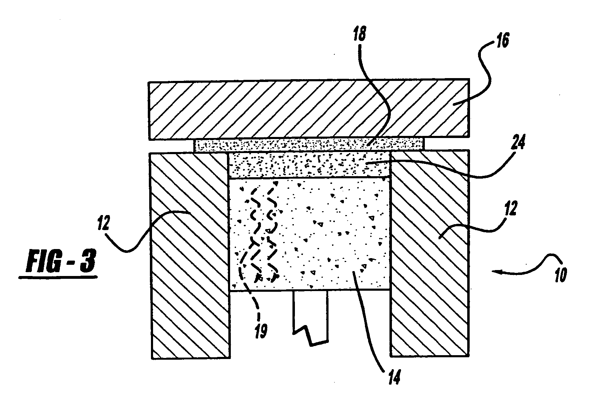

With reference to Figure 1, a schematic representation of a gas-permeable mold assembly according to the principles of the present invention is shown in an open position and generally designated by reference numeral 10. Mold assembly 10 includes three main portions; a mold body 12; a mold punch (or bottom plunger) 14; and a top platen 16. The plate 18 sits on top of the mold cavity and is held in place during the molding process by the top platen 16. As shown in Figure 3, a portion 19 of mold punch 14 is made from a porous, gas-permeable material. The porous, gas-permeable material enables gaseous reactants to be vented through it.

When mold assembly 10 is closed, as shown in Figure 2, top platen 16 aligns and meets with mold body 12 to form a mold cavity 20. The mold cavity 20 is defined by the mold body 12, solid shoe plate 18 and mold punch 14. It should be appreciated that punch 14 can be positioned on the top (not shown) or bottom (as depicted) of mold assembly 10. Its position depends upon the composite molded product that is to be pressed. In either formation, solid shoe plate 18 is located opposite mold punch 14. Top platen 16, mold body 12, and mold punch 14 are each operable to heat mold assembly 10. This heats up the molding ingredients and helps to initiate reactions in the mold cavity 20. The operating/molding temperature will vary depending upon the materials used. The operating/molding temperature is chosen to facilitate the reaction in mold cavity 20. Preferably, the operating/molding temperature is less than about 210°C. Mold assembly 10 is designed to enable the molding ingredients to be pressed together by punch 14. Preferably, mold assembly 10 is designed to enable a continuous pressure of between about 200 - 2,000 kg_{f}/cm² to be applied to the molding ingredients.

Portion 19 of mold assembly 10 is made of a porous, gas-permeable material. The porous, gas permeable material has a pore size and porosity that may vary depending upon the specific molding ingredients used. That is, the optimum pore size and distribution range will vary depending upon the matrix, materials, resins and other ingredients of the composite and the desired surface finish. Preferably, portion 19 is made from a porous, gas-permeable material having an average pore diameter between about 1 - 280 microns and a total porosity between about 5 - 25%. Most preferably, portion 19 is made from a porous gas-permeable material having an average pore diameter of about 15 microns and a total porosity of about 15%. A variety of materials can be used for portion 19. For example, a micro-porous sintered aluminum, such as METAPOR® available from Portec Ltd. of Winterthur, Switzerland, can be used for portion 19.

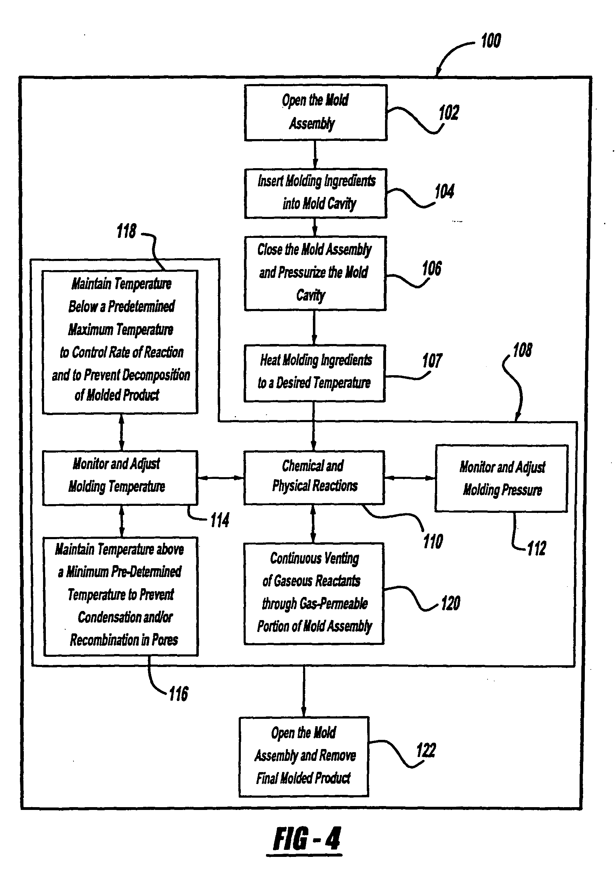

Referring to Figure 4, a method of compression molding a composite material according to the principles of the present invention is shown. The molding process 100 begins by opening the mold assembly 10, as indicated in block 102, to enable access to mold cavity 20. Once open, the molding ingredients used to make the composite material are inserted into the mold cavity 20, as indicated in block 104. The mold assembly 10 is then closed and mold cavity 20 is pressurized, as indicated in block 106, by moving punch 14 toward shoe plate 18. Additionally, the molding ingredients are heated to a desired temperature, as indicated in block 107. Once mold cavity 20 is closed, pressurized, and heated, the reaction process begins, as indicated in block 108.

The reaction process, as indicated in block 110, may include concurrent physical reactions (e.g., heating, melting, pressurization, and phase changes) and chemical reactions. Once a desired pressure and temperature are obtained, the molding pressure and temperature are monitored and adjusted, as indicated in blocks 112 and 114, respectively, throughout the molding process. The molding pressure is adjusted to a predetermined optimum pressure(s), or within a range of pressure(s), depending on the material being molded. Similarly, the temperature is adjusted to a predetermined optimum temperature(s), or within a range of temperature(s), depending on the material being molded. Preferably, the temperature of the mold is operated above a predetermined minimum temperature, as indicated in block 116, to prevent condensation and/or recombination of gaseous reactants and/or other compounds in the pores of the gas-permeable material. Concurrently, the temperature of the mold is operated below a predetermined maximum temperature, as indicated in block 118, to control the rate of reactions in the mold cavity and to prevent decomposition of molded product.

During the molding process, as indicated in block 120, gaseous reactants along with entrapped air and moisture are continuously vented through the porous, gas-permeable portion 19 of mold assembly 10, as shown in Figure 3. This occurs without disturbing the closed mold cavity 20. By venting without disturbing the closed mold cavity 20, the pressure and temperature are maintained, which significantly reduces the cycle time to produce molded products. Once a predetermined time for the reaction process passes, the mold is opened and the molded product 24 is removed, as indicated in block 122.

Thus, the present invention enables efficient molding of a composite material, such as a friction material, by venting gaseous reactants through the mold assembly without disturbing the mold cavity. A typical friction material could be virtually any type of material that is useful in braking systems. This would include semi-metallic friction materials, low-metallic friction materials, non-asbestos organics, ceramets, and other types known in the art. Common friction materials contain one or more thermosetting resinous binders (e.g., phenolic resins such as phenol-formaldehyde resins, epoxies), reinforcing fibers (e.g., aramid, steel, acrylic, mineral fibers, and the like), metal powders (e.g., iron, copper, brass, zinc, aluminum, antimony, and the like), solid lubricants (e.g., molybdenum disulfide, graphite, coke, stannic sulfide, antimony trisulfide, and the like), abrasives (e.g., tin oxide, magnesia, silica, iron oxide, alumina, rutile, and the like), organic fillers (e.g., rubber particles, cashew nut shell particles, nitrile rubber particles, and the like), and inorganic fillers (e.g., barites, gypsum, mica, titanates, and the like). Other materials and additives may be added as well as is known and common to the art.

### Example 1

The following ingredients were mixed in an Eirich/Littleford mixer by weight percent as follows:

| **Material** | **Wt %** |
|---|---|
| Phenolic Resin | 7.8 |
| Friction Dust | 3.5 |
| Rubber | 5.0 |
| Organic Fiber (Kevlar) | 3.5 |
| Cu Powder/Fiber | 8.0 |
| Ceramic Fiber | 4.0 |
| BaSO4 | 20.7 |
| Potassium Titanate Fiber | 18.0 |
| Mineral Fiber | 4.0 |
| Ca(OH)2 | 2.0 |
| Mica | 2.0 |
| Zircon | 10.0 |
| MgO | 3.0 |
| Antimony Sulfide | 2.5 |
| Graphite | 6.0 |
| Total | 100.00 |

The mixture was placed in mold cavity 20. The mold cavity 20 was closed by aligning top platen 16 with mold body 12. The mixture was molded at a temperature of 160°C and a pressure of 600 kg_{f}/cm² for a total of 120 seconds. As the mixture molded, the gaseous reactants were vented through the gas-permeable portion 19 of punch 14 of mold assembly 10 without disturbing the closed mold cavity 20. The gas-permeable portion 19 was made of METAPOR® BF210AF. The molded product 24 was then removed from the mold cavity 20. The characteristics of molded product 24 were within the desired product specifications. The gaseous reactants did not decompose nor recombine or condense in the pores, and no plugging of the pores was observed.

### Example 2

The following ingredients were mixed in an Eirich/Littleford mixer by weight percent as follows:

| **Material** | **Wt %** |
|---|---|
| Phenolic Resins (Modified or Unmodified) | 4.0 |
| Rubber | 0.8 |
| | |
| Cashew Friction Dust | 1.0 |
| Ground Tread Rubber | 1.0 |
| | |
| Iron/Steel Fibers | 23.7 |
| Organic Fibers | 0.5 |
| | |
| Oxides (MgO, Iron Oxides, and etc.) | 3.0 |
| Iron Powders | 10.0 |
| | |
| Coke (Petroleum or Metallurgical) | 8.0 |
| Graphite (Synthetic, Natural, and etc.) | 23.0 |
| Zinc Powders | 1.0 |
| Barytes (BaSO4) | 16.0 |
| Other Functional Fillers | 8.0 |
| Total | 100.00 |

The mixture was placed in mold cavity 20. The mold cavity 20 was closed by aligning top platen 16 with mold body 12. The mixture was molded at a temperature of 170°C and a pressure of 600 kg_{f}/cm² for a total of 120 seconds. As the mixture molded, the gaseous reactants were vented through the gas-permeable portion 19 of punch 14 of mold assembly 10 without disturbing the closed mold cavity 20. The gas-permeable portion 19 was made of METAPOR® BF210AF. The molded product 24 was then removed from the mold cavity 20. The characteristics of molded product 24 were within the desired product specifications. The gaseous reactants did not decompose nor recombine or condense in the pores, and no plugging of the pores was observed.

It should be appreciated that while only a partial portion of mold punch 14 is shown as being a porous, gas-permeable material, an entirety of mold punch 14 can be a porous, gas-permeable material. It should also be appreciated that while gas-permeable portion 19 is shown as being a part of mold punch 14, top platen 16 and/or mold body 12 alternatively and/or additionally may be made of a gas-permeable material and the venting of gaseous reactants occurring therethrough. Additionally, while Examples 1 and 2 close mold assembly 10 by aligning top platen 16 with mold body 12 (as depicted in Figure 2), alternatively, top platen 16 may be pre-aligned with mold body 12, and mold cavity 20 closed though the movement of mold punch 14. Further, while Examples 1 and 2 form a composite friction material, applications in which the use of such mold and molding method are advantageous include, among others, the molding of composite parts made with various synthetic thermosetting resins, such as phenolic resins (modified or unmodified), and structural components which may contain reinforcements such as solid moldings, pre-fabricated composite structures, and shaped articles such as refractory bricks.

Thus, the description of the invention is merely exemplary in nature and variations that do not depart from the gist of the invention are intended to be within the scope of the invention. Such variations are not to be regarded as a departure from the spirit and scope of the invention.

## Claims

1. A mold assembly operable to form a composite material, the mold assembly comprising:
a first mold member (12); and
a second mold member (14) operable to join with said first mold member to form a mold cavity (20),
wherein at least a portion (19) of one of said mold members (14) is a porous gas-permeable material operable to vent therethrough gaseous reactants resulting from chemical reactions occurring in said mold cavity (20) during a molding operation while preventing recombination and condensation of said gaseous reactants within said portion.

2. The mold assembly of Claim 1, wherein said gas-permeable material has a porosity between about 5 to 25% and an average pore diameter between about 1 to 280 microns.

3. The mold assembly of Claim 2, wherein said gas-permeable material has an average pore diameter of about 15 microns and a total porosity of about 15%.

4. The mold assembly of Claim 2, wherein said gas-permeable material is a metallic material.

5. The mold assembly of Claim 4, wherein said metallic gas-permeable material is aluminum.

6. The mold assembly of Claim 1, wherein at least a portion of one of said mold members is operable to heat said mold cavity.

7. The mold assembly of Claim 1, wherein said gas-permeable material is operable at temperatures less than about 210 degrees Celsius.

8. The mold assembly of Claim 1, wherein said gas-permeable material is operable at pressures between about 200 to 2,000 kg_{f}/cm².

9. The mold assembly of Claim 1, wherein the molded composite material is at least one of a friction material, phenolic resin, and a large reinforcement containing structure component.

10. A method of molding a composite material, the method comprising:
(a) introducing ingredients of the composite material into a mold cavity (20) of a mold assembly (10);
(b) closing said mold cavity (20);
(c) reacting at least a portion of said ingredients in said closed mold cavity (20); and
(d) venting gaseous reactants resulting from said reaction through a porous gas-permeable portion (19) of said mold assembly (10).

11. The method of Claim 10, wherein (d) includes venting said gaseous reactants through a porous gas-permeable sintered aluminum portion of said mold assembly.

12. The method of Claim 11, wherein (d) includes venting said gaseous reactants through a micro-porous sintered aluminum portion of said mold assembly (10), having an average pore diameter of about 15 microns and a total porosity of about 15%.

13. The method of Claim 10, further comprising preventing condensation and recombination of said gaseous reactants in pores of said porous gas-permeable portion(19) of said mold assembly (10) during venting.

14. The method of Claim 13, wherein preventing condensation and recombination includes maintaining a temperature of said portion (19) of said mold assembly (10) above a minimum predetermined temperature necessary to prevent condensation and recombination of said gaseous reactants in said pores.

15. The method of Claim 10, further comprising preventing decomposition of said ingredients.

16. The method of Claim 15, wherein preventing decomposition includes maintaining a temperature of said gas-permeable portion (19) of said mold assembly (10) be-low a maximum predetermined decomposition temperature of said ingredients.

17. The method of Claim 10, wherein (d) includes venting said gaseous reactants through a porous gas-permeable portion (19) of said mold assembly (10) having a porosity between about 5 to 25%.

18. The method of Claim 10, wherein (d) includes venting said gaseous reactants through a porous gas-permeable portion (19) of said mold assembly (10) having an average pore diameter between about 1 to 280 microns.

19. The method of Claim 10, further comprising maintaining a temperature of said gas-permeable portion (19) of said mold assembly (10) less than about 210 degrees Celsius.

20. The method of Claim 10, further comprising maintaining a pressure in said mold cavity (20) between about 200 to 2,000 kg_{f}/cm².

21. The method of Claim 10, wherein (a) includes introducing ingredients of at least one of a friction material, a phenolic resin, and a reinforcement-containing structure component.

22. The method of Claim 10, wherein (d) includes venting through a porous gas-permeable metallic portion of said mold body.

23. The method of Claim 10 for molding a friction material product made of the composite material wherein chemical reactions take place within a mold cavity (20) releasing gaseous reactants, wherein
- in (a) the composite material is a friction material;
- the method further comprises pressurizing said mold cavity (20) and heating said ingredients in the mold cavity (20) after closing the mold cavity (20);
- (e) includes reacting the ingredients in the mold cavity (20);
- (d) includes venting the gaseous reactants resulting from said reaction through a porous gas-permeable portion (19) of said mold assembly (10) while maintaining said mold cavity (20) in a closed state; and
- the method further comprises removing a molded friction material product (24).

24. The method of Claim 23, wherein (f) includes venting the gaseous reactants through a porous gas-permeable portion (19) of said mold assembly (10) having a porosity between about 5 to 25%.

25. The method of Claim 23, wherein (f) includes venting the gaseous reactants through a porous gas-permeable portion (19) of said mold assembly (10) having an average pore diameter between about 1 to 280 microns.

26. The method of Claim 23, wherein (f) includes venting the gaseous reactants through a porous gas-permeable sintered aluminum portion of said mold assembly (10) having an average pore diameter of about 15 microns and a total porosity of about 15%.

27. The method of Claim 23, further comprising preventing condensation and recombination of the gaseous reactants in pores of said porous gas-permeable portion (19) of said mold assembly (10) during venting by maintaining a temperature of said portion of said mold assembly (10) above a minimum predetermined temperature.

28. The method of Claim 23, further comprising preventing decomposition of said ingredients by maintaining a temperature of said gas-permeable portion (19) of said mold assembly (10) below a maximum predetermined decomposition temperature of said ingredients.

29. The method of Claim 23, further comprising controlling a rate of reaction of said ingredients by maintaining a temperature of said gas-permeable portion (19) of said mold assembly (10) within a predetermined temperature range.

30. The method of Claim 23, further comprising maintaining a temperature of said gas-permeable portion (19) of said mold assembly (10) less than about 210 degrees Celsius and maintaining a pressure in the mold cavity (20) between about 200 to 2,000 kg_{f}/cm².

31. The method of Claim 23, wherein (a) includes introducing ingredients of a friction material including phenolic resins which upon reacting generate gaseous reactants including ammonia and formaldehyde.
